# EUROPÄISCHE PATENTSCHRIFT

(11) **EP 1 555 106 B1**
(45) Veröffentlichungstag und Bekanntmachung des Hinweises auf die Patenterteilung: **05.08.2009**
(21) Anmeldenummer: 05000727.7
(22) Anmeldetag: 14.01.2005
(51) Int. Cl.: B29C 45/16, B60J 1/00, B29C 45/00

(54) **Transparente flächige Kunststoff-Fensterscheibe eines Kraftfahrzeugs mit kaschierter Anguss-Stelle , Verfahren zur Herstellung derselben und Verwendung derselben**
Transparent flat plastic window of a vehicle with lined injection mark, method of production and use thereof
Fenêtre plat en matière plastique transparente avec point d'injection revêtu pour un véhicule à moteur, procédé pour la produire et sa utilisation

(30) Priorität: 14.01.2004 DE 102004002012; 05.03.2004 DE 202004003468 U
(43) Veröffentlichungstag der Anmeldung: 20.07.2005
(73) Patentinhaber: Summerer, Franz Josef, 83253 Rimsting (DE)
(72) Erfinder: Summerer, Franz Josef, 83253 Rimsting (DE)
(74) Vertreter: Patentanwälte Lambsdorff & Lange

(56) Entgegenhaltungen:
- WO-A-99/44802
- US-A- 4 874 654
- US-A- 5 922 369
- US-B1- 6 468 458

## Beschreibung

Die Erfindung betrifft ein transparente flächige Kunststoff-Fernstenscheibe eines Kraftfahrzeugs, ein Verfahren zur Herstellung derselben und die Verwendung derselben.

Flächige transparente optische Formteile, wie Kraftfahrzeug-Verscheibungen, wurden bisher in der Regel aus Glas hergestellt. Aufgrund des geringeren Gewichts, der höheren Schlagzähigkeit und vor allem der erhöhten Design-Freiheit erlangen in jüngster Zeit optische Formteile aus Kunststoff eine zunehmende Bedeutung.

Die Herstellung von großflächigen, transparenten Kunststoff-Formteilen mit geringer Wandstärke ist aufgrund der hohen erforderlichen Spritzdrücke technologisch schwierig. Hinzu kommt, dass bei transparenten Formteilen erhöhte Qualitätsanforderungen im Hinblick auf die optische Güte (Schlierenfreiheit, Spannungsfreiheit, Vermeidung von Einfall) bestehen, deren Einhaltung zusätzliche Herausforderungen mit sich bringt. Eine weitere Schwierigkeit, die bei der Herstellung großflächiger Kunststoff-Formteile zu überwinden ist, betrifft die Problematik der Kunststoffzuführung. In vielen Fällen ist eine randseitige Zuführung der Kunststoffmasse erforderlich, um ein Formteil mit optisch einwandfreien Oberflächen, d.h. ohne störende Anguss-Stellen, zu erzielen.

Um Anguss-Stellen an optischen Oberflächen eines transparenten flächigen Kunststoff-Formteils zu vermeiden, wird das sogenannte Filmanguss-Verfahren eingesetzt. Bei diesem Verfahren erfolgt die Anspritzung des Formteils seitlich außerhalb des Formhohlraums, in welchem das Formteil hergestellt wird (sogenannte "indirekte Anspritzung"). Zwischen dem Anspritzpunkt und einem als Angussverlängerung ausgebildeten Randbereich des Formhohlraums ist eine sogenannte Filmplatte vorgesehen, in welcher Angusskanäle eingearbeitet sind, die sich ausgehend vom Anspritzpunkt über die Filmplatte verteilen und die Filmplatte über die gesamte Breite des Formhohlraums an diesen anbinden. Nach dem Erkalten der Kunststoffmasse in dem Formhohlraum wird das Formteil aus dem geöffneten Werkzeug entnommen, wobei die über die Filmplatte zugeführte Kunststoffmasse als Angusskaltkanäle integral in seitlicher Verlängerung des Formteils an diesem angeformt sind (sogenannte Angussverlängerung).

Aufgrund der bei der Filmanguss-Technik vorgenommenen seitlichen bzw. randseitigen Kunststoffzuführung treten keine Anguss-Stellen an optischen Oberflächen auf. Nachteilig ist jedoch, dass die Angussverlängerung mit den Angusskaltkanälen von dem Formteil abgetrennt werden muss, wodurch ein zusätzlicher Arbeitsschritt benötigt wird. Ferner fällt durch das Abtrennen der Angussverlängerung ein relativ großer Materialverlust an.

Direkteinspritz-Verfahren, bei welchen die Kunststoffmasse z.B. über eine Nadelventil-Düse oder einen Sperrschieber direkt aus dem Heißkanal in den Formhohlraum eingebracht wird, werden bereits für die Herstellung von nicht optischen Formteilen eingesetzt. Anders als bei der Filmanguss-Technik erfolgt die Kunststoffzuführung nicht seitlich in Richtung der Flächenebene des Formteils, sondern an einer Oberfläche des Formteils. Der Hauptvorteil der Direkteinspritzung besteht darin, dass die beim Filmanguss-Standardverfahren erforderliche Angussabtrennung sowie die damit verbundenen Materialmehrkosten entfallen. Allerdings ergibt sich im Fall der Herstellung von optischen Formteilen das Problem, dass die Anspritzung an einer optischen Oberfläche des Formteils erfolgen muss und infolgedessen die (an einer Sichtfläche, üblicherweise an der Rückseite des flächigen Formteils) auftretende Anguss-Stelle durch das transparente Formteil hindurch sichtbar bleibt. Daher wurden Direkt-Einspritzverfahren bisher her nicht für die Herstellung optischer Formteile in Betracht gezogen.

In der Schrift US 5,922,369 ist die Herstellung eines zweikomponentigen Kunststoff-Formteils aus einer unteren weißen Schicht und einer oberen roten Schicht beschrieben. Die untere weiße Schicht wird durch ein Direkt-Einspritzverfahren hergestellt, wobei eine Anguss-Stelle auf der dem Betrachter zugewandten Oberfläche verbleibt. Diese Anguss-Stelle wird durch die obere rote Schicht abgedeckt und dadurch gegenüber dem Betrachter versteckt.

Die Schrift WO 99/44802 beschreibt eine transparente Kunststoffscheibe, welche durch seitliches Anspritzen über eine Filmanbindung hergestellt wird. Der Anguss verbleibt dabei an der Kunststoffscheibe und wird von einer zweiten, nicht transparenten Komponente umspritzt.

Der vorliegenden Erfindung liegt die Aufgabe zugrunde, eine transparente flächige Kunststoff-Fensterscheibe eines kraftfahrzeugs mit einwandfreien optischen Eigenschaften und geringen Materialkosten zu schaffen. Ferner ist es Aufgab der Erfindung, ein Verfahren zur Herstellung eine solchen Kunststoff-Fensterscheibe anzugeben.

Die der Erfindung zugrunde liegende Aufgabenstellung wird durch die Merkmale der unabhängigen Ansprüche 1, 14, und 19 gelöst. Vorteilhafte Ausgestaltungen und Weiterbildungen der Erfindung sind in den Unteransprüchen angegeben.

Durch die Abdeckung der Anguss-Stelle durch das Abdeckmaterial wird erreicht, dass die Anguss-Stelle "rückseitig verschattet" wird, d.h. wesentlich weniger Durchgangslicht als ohne Abdeckmaterial für die Wahrnehmung der Anguss-Stelle zur Verfügung steht. Dadurch wird erreicht, dass die Anguss-Stelle für den Betrachter durch die transparente Kunststoff-Fensterscheibe hindurch praktisch nicht mehr oder nur noch bei sehr genauer Betrachtung erkennbar ist. Da es bei Kunststoff-Fensterscheiben in vielen Fällen möglich und häufig sogar wünschenswert ist, eine randseitige, rahmenartige Abdeckung anzubringen, ist die erfindungsgemäße Lösung in vielen Anwendungsfällen einsetzbar. Hinzu kommt, dass Kunststoff-Fensterscheiben in ihrem Zentralbereich in der Regel wesentlich genauer betrachtet und wahrgenommen werden, als in Randbereichen. Da sich die Anguss-Stelle in bevorzugter Weise im randnahen Bereich der optischen Oberfläche befindet, tritt insofern noch ein physiologischer Effekt (höhere Wahrnehmungsschwelle), der die Wahrnehmung der Angussrippe bzw. Abtrennstelle erschwert, hinzu. Durch die erfindungsgemäße Abdeckung der Anguss-Stelle wird erreicht, dass ein Direkt-Anspritzverfahren zur Herstellung der Kunststoff-Fensterscheibe ermöglicht wird.

Vorzugsweise handelt es sich bei der Anguss-Stelle um eine von der optischen Oberfläche wegstehende Angussrippe oder um eine Abtrennstelle einer solchen von der optischen Oberfläche abgetrennten Angussrippe. Eine Angussrippe tritt beispielsweise auf, wenn ein Sperrverschieber-Heißkanalverschluss für die Spritzgieß-Fertigung der flächigen Kunststoff-Fensterscheibe eingesetzt wird. Es ist jedoch auch möglich, dass die Anguss-Stelle eine andere Oberflächen-Inhomogenität darstellt. Z.B. wird bei der Verwendung eines Nadelventil-Verschlusses eines Heißkanals bei einem Direkt-Einspritzverfahren die Abdruckstelle der Nadel auf der optischen Oberfläche der flächigen Kunststoff-Fensterscheibe erzeugt.

Vorzugsweise ist das Abdeckmaterial ein an die Kunststoff-Fensterscheibe angespritztes Kunststoffmaterial. Derartige Kunststoff-Fensterscheiben werden auch als 2K-Formteile (2K: zwei Komponenten) bezeichnet, da eine erste Kunststoffkomponente die transparente Kunststoff-Fensterscheibe und die zweite Kunststoffkomponente die Abdeckung bildet. Derartige 2K-Kunststoff-Fensterscheiben können kostengünstig in einer Spritzgießmaschine mit einem speziellen Plattenwender zum Anspritzen der zweiten Komponente an die bereits gefertigte erste Komponente hergestellt werden. Mittels der Erfindung können optische 2K-Kunststoff-Fensterscheiben nun ohne Einsatz der aufwändigen Filmanguss-Technik hergestellt werden. Der Vorteil der Verwendung eines angespritzten Kunststoffmaterials als Abdeckung besteht auch darin, dass durch das unter hoher Temperatur und hohem Druck erfolgende Anspritzen eine homogene Oberflächen-Verschmelzung zwischen der Anguss-Stelle und dem Kunststoffmaterial (Abdeckung) auftritt, wodurch eine minimale Wahrnehmbarkeit der Anguss-Stelle gewährleistet wird.

Bei der Herstellung der Abdeckung durch ein angespritztes Kunststoffmaterial kennzeichnet sich eine erste vorteilhafte Ausführungsvariante dadurch, dass wenigstens eine von der optischen Oberfläche wegstehende Angussrippe von dem Kunststoffmaterial freistehend ummantelt ist. Die Angussrippe steht in diesem Fall weiterhin über ihre Umgebung vor, die erfindungsgemäße Abdeckung der Angussrippe wird lediglich mittels eines dünnen Überzugs der Angussrippe mit Abdeckmaterial bewerkstelligt. Vorteilhaft ist, dass für diese Maßnahme nur wenig Abdeckmaterial benötigt wird.

Nach einer alternativen Ausführungsvariante kann vorgesehen sein, dass wenigstens eine von der optischen Oberfläche wegstehende Angussrippe vollständig in dem Kunststoffmaterial eingebettet ist. In diesem Fall ist die Angussrippe vollständig in dem Kunststoffmaterial verschwunden, d.h. auch von der Seite, auf welcher das Kunststoff-Abdeckmaterial aufgebracht wurde, nicht mehr zu erkennen. Eine solche Lösung bietet sich insbesondere dann an, wenn aus konstruktiven Gründen ein stärkerer Rand bzw. Rahmen aus Abdeckmaterial an der flächigen Kunststoff-Fensterscheibe angebracht werden soll.

Eine andere Möglichkeit besteht darin, dass das Abdeckmaterial ein auf die Kunststoff-Fensterscheibe aufgetragener Lack ist. Eine von der optischen Oberfläche der Kunststoff-Fensterscheibe wegstehende Angussrippe wird in diesem Fall von dem Lack ummantelt.

Eine weitere vorteilhafte Maßnahme kennzeichnet sich dadurch, dass die Kunststoff-Fensterscheibe eine Tönung, z.B. eine Farbtönung, aufweist. Schon eine relativ geringe Tönung, die die Transparenz der Kunststoff-Fensterscheibe in kaum wahrnehmbarer Weise vermindert, verstärkt im Bereich der Anguss-Stelle die kaschierende Wirkung des Abdeckmaterials erheblich.

In Bezug auf das Abdeckmaterial werden besonders gute Ergebnisse mit einem vollständig undurchsichtigen Abdeckmaterial erreicht, da in diesem Fall eine "Rückseitenbeleuchtung" der Anguss-Stelle vollständig unterbunden ist.

Ferner ist es vorteilhaft, ein schwarzes Abdeckmaterial zu verwenden, da auf diese Weise eine Minimierung des für die Wahrnehmung der Anguss-Stelle (z.B. Angussrippe bzw. der Abtrennstelle derselben oder Nadel-Abdruckstelle) zur Verfügung stehenden Reflektionslichtes erreicht wird.

Bei der Kunststoff-Fensterscheibe können häufig eine Vielzahl der genannten Maßnahmen (Anbringen eines 2K-Schwarzrandes mit ausreichender Wandstärke sowie eine Tönung der Scheibe) kombiniert werden, wodurch in der Praxis eine nahezu perfekte Kaschierung des durch die Anguss-Stelle bewirkten optischen Defekts ermöglicht wird. Das kostenintensive Filmanguss-Verfahren zur Scheibenherstellung kann auf diese Weise vermieden werden.

Zur Herstellung der Kunststoff-Fensterscheibe wird zunächst die Kunststoff-Fensterscheibe mittels eines Direkt-Einspritzverfahrens durch Spritzgießen hergestellt, wodurch mindestens eine Anguss-Stelle an einer optischen Oberfläche der Kunststoff-Fensterscheibe auftritt. Diese sichtbare Anguss-Stelle wird mit einem Abdeckmaterial geringerer Transparenz als die Kunststoff-Fensterscheibe bedeckt. Durch die erfindungsgemäße Kombination eines Direkt-Einspritzverfahrens und der Abdeckung der dabei unvermeidlich entstehenden Anguss-Stelle zum Zwecke der Kaschierung derselben können einwandfreie Kunststoff-Fensterscheiben auf kostengünstigem Wege gefertigt werden.

Mit optischer Oberfläche ist bei einer flächigen, transparenten Kunststoff-Fensterscheibe die Ober- bzw. Unterfläche der Fensterscheibe, nicht jedoch die Seitenrandfläche, gemeint. Die optische Oberfläche, an welcher sich die Anguss-Stelle befindet, ist dabei die für einen Betrachter in Blickrichtung hintere (rückseitige) Oberfläche der Kunststoff-Fensterscheibe.

Die Erfindung wird nachfolgend anhand eines Ausführungsbeispiels sowie Varianten desselben unter Bezugnahme auf die Zeichnungen näher beschrieben; in diesen zeigt:
- Fig. 1: eine transparente Kunststoffscheibe mit einem an die Rückseite der Scheibe angespritzten Kunststoffrand in Draufsicht auf die Rückseite der Kunststoffscheibe;
- Fig. 2: eine Teilschnittansicht der in Fig. 1 dargestellten Kunststoffscheibe entlang der Linie X-X gemäß einer ersten Variante der Erfindung;
- Fig. 3: eine Teilschnittansicht der in Fig. 1 dargestellten Kunststoffscheibe entlang der Linie X-X gemäß einer zweiten Variante der Erfindung; und
- Fig. 4: eine Schnittdarstellung eines Abschnitts eines Spritzgusswerkzeugs zur Herstellung der flächigen Kunststoffscheibe und zur Erläuterung eines Direkt-Anspritzverfahrens.

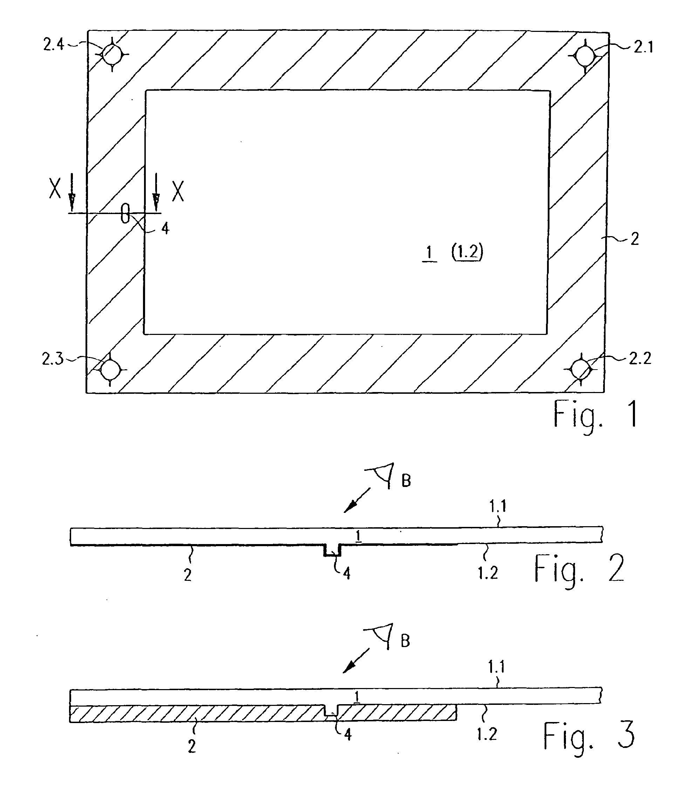

Die Kunststoffscheibe 1 besteht vollflächig aus einem transparenten Kunststoffmaterial und weist z.B. eine im Wesentlichen rechteckige Kontur auf. Die dem Betrachter in Fig. 1 zugewandte Seite der Kunststoffscheibe 1 ist die Rückseite der Kunststoffscheibe 1. Wie im Folgenden noch näher erläutert wird und in den Figuren 2 und 3 in Schnittdarstellung erkennbar ist, steht an dieser Rückseite eine Angussrippe 4 vor. Die Angussrippe 4 befindet sich an einer optischen Ober-
fläche der Rückseite 1.2 der Kunststoffscheibe 1 und vorzugsweise im randnahen Bereich derselben. Die optische Oberfläche an der Vorderseite 1.1 der Kunststoffscheibe ist - insbesondere auch im Bereich gegenüberliegend der Angussrippe 4 - freiliegend (optisch nicht abgedeckt) und somit für den Betrachter B sichtbar.

Rückseitig ist an die Kunststoffscheibe 1 ein sogenannter Schwarzrand 2 angespritzt. Der Schwarzrand 2 umläuft die Kunststoffscheibe 1 in Art eines geschlossenen Rahmens. Der Schwarzrand 2 wird durch Anspritzen einer Kunststoffmasse geringer bzw. nicht vorhandener Transparenz an die bereits fertiggestellte transparente Kunststoffscheibe 1 realisiert. Die Lage der Angussrippe 4 wird so gewählt, dass sich die Angussrippe 4 in einem Bereich innerhalb des Schwarzrandes 2 befindet.

Die Dicke der transparenten Kunststoffscheibe 1 kann beispielsweise 4 mm betragen. Die Seitenlängen der transparenten Kunststoffscheibe 1 bewegen sich in den üblichen Dimensionen für Kfz-Fenster oder Schiebedächer, d.h. sind in der Regel um mehr als den Faktor 50 größer als die Dicke der Kunststoffscheibe 1. An den Schwarzrand 2 können integrale Befestigungselemente 2.1, 2.2, 2.3, 2.4 angeformt sein, welche zur Befestigung der Kunststoffscheibe 1 beispielsweise an einer Schiebemechanik dienen.

Ohne den Schwarzrand 2 ist die Angussrippe 4 sowohl von der Rückseite 1.2 als auch der Vorderseite 1.1 der Kunststoffscheibe 1 deutlich erkennbar. Das Abtrennen der Angussrippe ändert daran nichts, da die Trennfläche weiterhin deutlich auch von der Vorderseite 1.1 der Kunststoffscheibe 1 (d.h. in Durchsicht durch die Scheibe) erkennbar bleibt.

Erfindungsgemäß wird zur Herstellung der Kunststoffscheibe 1 ein Direkt-Einspritzverfahren z.B. mit Heißkanal-Sperrschieberverschluss eingesetzt und die dabei unvermeidliche Angussrippe 4 rückseitig von dem Schwarzrand 2 abgedeckt. Die Figuren 2 und 3 zeigen hierfür zwei Varianten. In Fig. 2 ist die Stärke des Schwarzrandes 2 geringer als die Höhe der Angussrippe 4 über der Rückseite 1.2 der Kunststoffscheibe 1. In diesem Fall wird die Angussrippe von dem Schwarzrand 2 ummantelt. Dies hat zur Folge, dass von der Rückseite kein Licht mehr auf die Angussrippe 4 fällt. Für den Betrachter B, welcher die Vorderseite 1.1 der transparenten Kunststoffscheibe 1 betrachtet, ist die Angussrippe 4 nunmehr kaum oder gar nicht mehr zu erkennen.

Eine zweite Variante besteht darin, gemäß Fig. 3 die Angussrippe 4 vollständig in den Schwarzrand 2 einzubetten. In diesem Fall verschwindet die Kontur der Angussrippe 4 in dem Schwarzrand 2 und ist auch von der Rückseite der Kunststoffscheibe 1 her nicht mehr erkennbar. Der Schwarzrand 2, der z.B. bei Schiebedächern von Kraftfahrzeugen verwendet wird, löst damit zugleich das Problem der Kaschierung der Angussrippe 4 beim Betrachten der Kunststoffscheibe 1 von der Sichtseite (Vorderseite 1.1) her.

Die Stärke des Schwarzrandes 2 in Fig. 2 kann z.B. 2 mm und die Stärke des Schwarzrandes 2 in der Fig. 3 z.B. 5 mm betragen.

Eine Abtrennung der Angussrippe 4 ist aus optischen Gründen nicht erforderlich, kann jedoch vorgenommen werden, sofern z.B. Bauhöhen-Beschränkungen dies wünschenswert erscheinen lassen. In diesem Fall kaschiert der Schwarzrand 2 die Abtrennstelle.

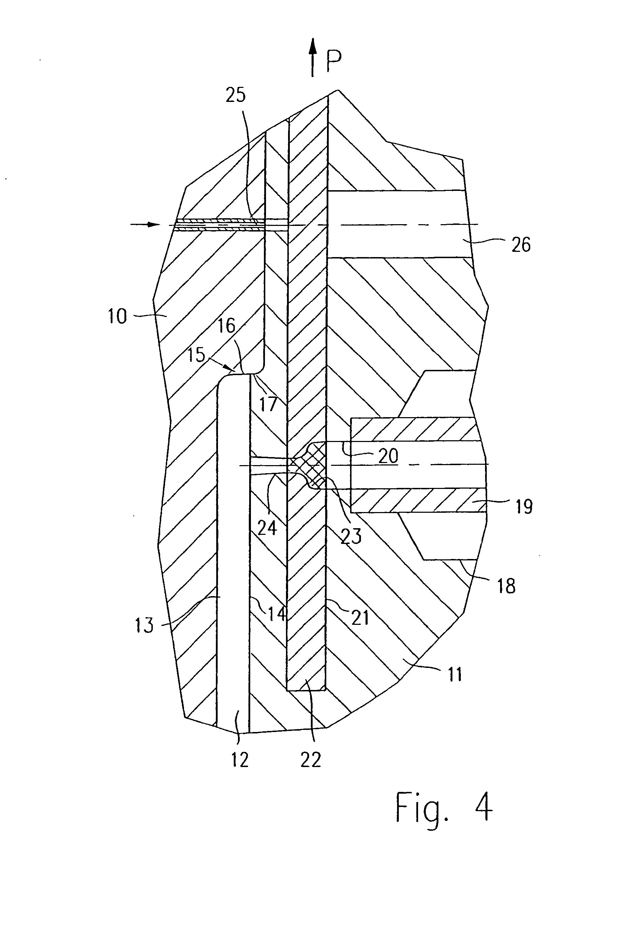

Fig. 4 zeigt einen Ausschnitt aus einem Werkzeug zur Herstellung der Kunststoffscheibe 1 mittels eines Direkt-Anspritzverfahrens. Gemäß der üblichen Bauweise eines Spritzgusswerkzeugs besteht dieses aus zwei Formplatten 10, 11, zwischen denen eine Kavität 12 ausgebildet ist. Die Kavität 12 wird durch eine Vertiefung 13 in der Formplatte 10 (sogenannte Matrizenformplatte) und durch einen Vorsprung 14 (sogenannter Formkern) in der Formplatte 11 (sogenannte Formkernplatte) realisiert. Die Kavität 12 wird durch einen Tauchkantenspalt 15 begrenzt, der durch eine matrizenseitige Tauchkante 16 und eine kernseitige Tauchkante 17 definiert ist.

Eine in der Formkernplatte 11 eingearbeitete Kunststoffzuführungs-Einheit 18 dient dazu, beim Befüllvorgang flüssige, transparente Kunststoffmasse in die Kavität 12 zur Herstellung der Kunststoffscheibe 1 einzuleiten. Die Kunststoffzuführungs-Einheit 18 umfasst einen sogenannten Heißkanal 19 mit einer zentralen Heißkanalbohrung 20, über welche flüssiger Kunststoff von einer Kunststoffquelle (nicht dargestellt) in Richtung zu der Kavität 12 geleitet wird. Der Heißkanal 19 wird im Spritzgießbetrieb stets auf einer Temperatur gehalten, die oberhalb der Verfestigungstemperatur der Kunststoffmasse liegt, so dass in dem Heißkanal 19 Kunststoff stets in flüssiger Form vorliegt.

Die Heißkanalbohrung 20 mündet in eine in der Formkernplatte 11 eingearbeitete Nut 21, in welcher ein Sperrschieber 22 verschieblich geführt aufgenommen ist. Der Sperrschieber 22 ist in einer Ebene senkrecht zu der Heißkanalbohrung 20 orientiert und kann in Richtung des Pfeils P aus der in Fig. 4 gezeigten Position aus der Nut 21 herausgezogen werden.

Der Sperrschieber 22 weist einen Durchtrittskanal 23 auf, welcher in der in Fig. 2 gezeigten Position des Sperrschiebers 22 an die Heißkanalbohrung 20 anschließt. Ein in der Formkernplatte 11 vorgesehener Angusskanal 24 verbindet den Durchtrittskanal 23 im Sperrschieber mit der Kavität 12.

Beim Befüllvorgang wird flüssige Kunststoffmasse von der Heißkanalbohrung 20 über den Durchtrittskanal 23 und den Angusskanal 24 in die Kavität 12 geleitet. Sobald die Kavität 12 ausreichen gefüllt ist, wird der Sperrschieber 22 in Richtung des Pfeils P verschoben. Ein Kunststoffrest, welcher in dem Durchtrittskanal 23 zurückbleibt und sich verfestigt, wird über einen Auswerfer 25 und eine in der Formkernplatte 11 vorgesehene Auswerferbohrung 26 ausgestoßen. Gleichzeitig erhärtet auch die in dem Angusskanal 24 enthaltene Kunststoffmasse und bildet die integral an der Kunststoffscheibe 1 angeformte Angusrippe 4.

Es wird darauf hingewiesen, dass bei einem Direkt-Einspritzverfahren auch andere Schließmechaniken (z.B. Nadeldüsen-Verschlüsse usw.) zum Einsatz kommen können. Unvermeidlicherweise bleibt jedoch stets eine Angussrippe 4 (bei einem Sperrschieber-Verschluss) oder ein anderer Oberflächen-Defekt (bei einem Nadeldüsen-Verschluss eine Abdruckstelle der Düsennadel) im Bereich einer optischen Oberfläche der Kunststoffscheibe 1 zurück. Das Vorhandensein eines solchen Oberflächen-Defekts (Anguss-Stelle) im Bereich einer optischen Oberfläche der Kunststoffscheibe kann, wie bereits erwähnt, nur durch den Filmanguss - d.h. ein indirektes Einspritzverfahren - vermieden werden, welcher seitlich im Bereich des Tauchkantenspalts 15 anbindet. Dabei müssen jedoch die bereits erwähnten Nachteile (hoher Materialverlust, Abtrennung der Angussverlängerung) in Kauf genommen werden.

Zum Anspritzen der zweiten Komponente an die Kunststoffscheibe 1 wird die Formkernplatte 11 gegen eine andere Formkernplatte (sogenannte Anspritz-Formplatte - ist in Fig. 4 nicht dargestellt) ausgetauscht. Die verfestigte Kunststoffscheibe 1 verbleibt in der Matrizenformplatte 10. Die Anspritz-Formkernplatte (nicht dargestellt) ist ähnlich wie die Formkernplatte 11 gestaltet, jedoch weist der Formkern 14 einen randseitig angeordneten, vertieften Abschnitt auf, dessen Form komplementär zu der Form der anzuspritzenden zweiten Komponente (z.B. Schwarzrands 2) ist. Über eine in diesen vertieften Abschnitt mündende Kunststoffzuführung wird die Kunststoffmasse zum Anspritzen der zweiten Komponente in die zwischen dem vertieften Abschnitt des Formkerns der Anspritz-Formplatte und der Oberfläche der Kunststoffscheibe 1 auftretenden Anspritzkavität eingeleitet.

Zusammenfassend schafft die Erfindung ein transparente flächige Kunststoff-Fernstenscheibe eines Kraftfahrzeugs, welche bei einfacher und kostengünstiger Herstellung mittels eines Direkt-Einspritzverfahrens trotz des Vorhandenseins einer Angussrippe (oder einer anderen durch das Spritzen des transparenten Kunststoff-Formteils bewirkten sichtbaren Anguss-Stelle) an einer optischen Oberfläche dennoch die geforderten Ansprüche an die Freiheit von optischen Inhomogenitäten an optischen Oberflächen einhält.

## Patentansprüche

1. Transparente flächige Kunststoff-Fensterscheibe eines Kraftfahrzeugs, mit mindestens einer sich an einer optischen Oberfläche (1.2) der Kunststoff-Fensterscheibe (1) befindenden, infolge der Anwendung eines Direkt-Einspritzverfahrens bei der Herstellung der Kunststoff-Fensterscheibe (1) auftretenden Anguss-Stelle (4), wobei die Anguss-Stelle (4) von einem Abdeckmaterial (2) geringerer Transparenz als die Kunststoff-Fensterscheibe (1) bedeckt ist.

2. Transparente flächige Kunststoff-Fensterscheibe eines Kraftfahrzeugs nach Anspruch 1,
**dadurch gekennzeichnet,**
**dass** es sich bei der Anguss-Stelle um eine von der optischen Oberfläche (1.2) wegstehende Angussrippe (4) oder um eine Abtrennstelle einer solchen von der optischen Oberfläche (1.2) abgetrennten Angussrippe (4) oder um eine Abdruckstelle einer Nadel eines Nadelventil-Verschlusses handelt.

3. Transparente flächige Kunststoff-Fensterscheibe eines Kraftfahrzeugs nach Anspruch 1 oder 2,
**dadurch gekennzeichnet,**
**dass** sich die Anguss-Stelle (4) im randnahen Bereich der optischen Oberfläche (1.2) befindet.

4. Transparente flächige Kunststoff-Fensterscheibe eines Kraftfahrzeugs nach einem der vorhergehenden Ansprüche,
**dadurch gekennzeichnet,**
**dass** das Abdeckmaterial ein an der Kunststoff-Fensterscheibe (1) angespritztes Kunststoffmaterial (2) ist.

5. Transparente flächige Kunststoff-Fensterscheibe eines Kraftfahrzeugs nach Anspruch 4,
**dadurch gekennzeichnet,**
**dass** wenigstens eine von der optischen Oberfläche (1.2) wegstehende Angussrippe (4) von dem Kunststoffmaterial (2) freistehend ummantelt ist.

6. Transparente flächige Kunststoff-Fensterscheibe eines Kraftfahrzeugs nach Anspruch 4,
**dadurch gekennzeichnet,**
**dass** wenigstens eine von der optischen Oberfläche (1.2) wegstehende Angussrippe (4) vollständig in dem Kunststoffmaterial (2) eingebettet ist.

7. Transparente flächige Kunststoff-Fensterscheibe eines Kraftfahrzeugs nach einem der Ansprüche 1 bis 3,
**dadurch gekennzeichnet,**
**dass** das Abdeckmaterial (2) ein auf die Kunststoff-Fensterscheibe (1) aufgetragener Lack ist.

8. Transparente flächige Kunststoff-Fensterscheibe eines Kraftfahrzeugs nach Anspruch 7,
**dadurch gekennzeichnet,**
**dass** wenigstens eine von der optischen Oberfläche (1.2) wegstehende Angussrippe (4) von dem Lack ummantelte ist.

9. Transparente flächige Kunststoff-Fensterscheibe eines Kraftfahrzeugs nach einem der vorhergehenden Ansprüche,
**dadurch gekennzeichnet,**
**dass** die Kunststoff-Fensterscheibe (1) eine Tönung aufweist.

10. Transparente flächige Kunststoff-Fensterscheibe eines Kraftfahrzeugs nach einem der vorhergehenden Ansprüche,
**dadurch gekennzeichnet,**
**dass** das Abdeckmaterial (2) vollständig undurchsichtig ist.

11. Transparente flächige Kunststoff-Fensterscheibe eines Kraftfahrzeugs nach einem der vorhergehenden Ansprüche,
**dadurch gekennzeichnet,**
**dass** das Abdeckmaterial (2) schwarz ist.

12. Transparente flächige Kunststoff-Fensterscheibe eines Kraftfahrzeugs nach einem der vorhergehenden Ansprüche,
**dadurch gekennzeichnet,**
**dass** das Abdeckmaterial (2) die Kunststoff-Fensterscheibe (1) in Art eines Rahmens geschlossen umläuft.

13. Transparente flächige Kunststoff-Fensterscheibe eines Kraftfahrzeugs nach einem der vorhergehenden Ansprüche,
**dadurch gekennzeichnet,**
**dass** die der optischen Oberfläche (1.2) gegenüberliegende optische Oberfläche (1.1) der Kunststoff-Fensterscheibe (1) eine Sichtfläche der Kunststoff-Fensterscheibe (1) ist.

14. Verfahren zur Herstellung einer transparenten flächigen Kunststoff-Fensterscheibe eines Kraftfahrzeugs, mit den Schritten:
- Spritzgießen der Kunststoff-Fensterscheibe (1) mittels eines Direkt-Einspritzverfahrens, bei dem mindestens eine sich an einer optischen Oberfläche (1.2) der Kunststoff-Fensterscheibe (1) befindende Anguss-Stelle (4) auftritt; und
- Bedecken der Anguss-Stelle (4) mit einem Abdeckmaterial (2) geringerer Transparenz als die Kunststoff-Fensterscheibe (1) .

15. Verfahren nach Anspruch 14,
**dadurch gekennzeichnet,**
**dass** bei dem Direkt-Einspritzverfahren die Kunststoffmasse zur Herstellung der Kunststoff-Fensterscheibe (1) über einen Einspritzkanal mit Sperrschieberverschluss (22) oder Nadelventil-Verschluss einem Formhohlraum zugeführt wird.

16. Verfahren nach einem der Ansprüche 14 oder 15,
**dadurch gekennzeichnet,**
**dass** zum Bedecken der Anguss-Stelle (4) ein Abdeckmaterial (2) aus Kunststoff an die Kunststoff-Fensterscheibe (1) angespritzt wird.

17. Verfahren nach Anspruch 14 bis 16,
**dadurch gekennzeichnet,**
**dass** das Abdeckmaterial (2) vollständig undurchsichtig ist.

18. Verfahren nach Anspruch 14 bis 17,
**dadurch gekennzeichnet,**
**dass** das Abdeckmaterial (2) schwarz ist.

19. Verwendung der transparenten flächigen Kunststoff-Fensterscheibe eines Kraftfahrzeugs nach einem der Ansprüche 1 bis 12 derart, dass die der optischen Oberfläche (1.2) gegenüberliegende optische Oberfläche (1.1) der Kunststoff-Fensterscheibe (1) als Sichtseite verwendet wird.

## Claims

1. Transparent sheet-like plastic window pane of a motor vehicle, with at least one sprue mark (4) which is located on an optical surface (1.2) of the plastic window pane (1) and occurs as a result of the use of a direct injection-moulding process during production of the plastic window pane (1), the sprue mark (4) being covered by a covering material (2) of lower transparency than the plastic window pane (1).

2. Transparent sheet-like plastic window pane of a motor vehicle according to Claim 1,
**characterized in that**
the sprue mark is a sprue rib (4) which protrudes from the optical surface (1.2) or a separation mark where a sprue rib (4) of this type has been separated from the optical surface (1.2) or an imprint mark of a needle of a needle valve closure.

3. Transparent sheet-like shaped plastic window pane of a motor vehicle according to Claim 1 or 2,
**characterized in that**
the sprue mark (4) is located in the region close to the edge of the optical surface (1.2).

4. Transparent sheet-like plastic window pane of a motor vehicle according to one of the preceding claims,
**characterized in that**
the covering material is a plastics material (2) which has been injection-moulded onto the plastic window pane (1).

5. Transparent sheet-like plastic window pane of a motor vehicle according to Claim 4,
**characterized in that**
at least one sprue rib (4) which protrudes from the optical surface (1.2) is provided with a free-standing sheathing of the plastics material (2).

6. Transparent sheet-like plastic window pane of a motor vehicle according to Claim 4,
**characterized in that**
at least one sprue rib (4) which protrudes from the optical surface (1.2) is completely embedded in the plastics material (2) .

7. Transparent sheet-like plastic window pane of a motor vehicle according to one of Claims 1 to 3,
**characterized in that**
the covering material (2) is a paint which has been applied to the plastic window pane (1).

8. Transparent sheet-like plastic window pane of a motor vehicle according to Claim 7,
**characterized in that**
at least one sprue rib (4) which protrudes from the optical surface (1.2) is sheathed by the paint.

9. Transparent sheet-like plastic window pane of a motor vehicle according to one of the preceding claims,
**characterized in that**
the plastic window pane (1) has a tint.

10. Transparent sheet-like plastic window pane of a motor vehicle according to one of the preceding claims,
**characterized in that**
the covering material (2) is completely opaque.

11. Transparent sheet-like plastic window pane of a motor vehicle according to one of the preceding claims,
**characterized in that**
the covering material (2) is black.

12. Transparent sheet-like plastic window pane of a motor vehicle according to one of the preceding claims,
**characterized in that**
the covering material (2) runs continuously around the plastic window pane (1) in the manner of a frame.

13. Transparent sheet-like plastic window pane of a motor vehicle according to one of the preceding claims,
**characterized in that**
the optical surface (1.1) opposed to the optical surface (1.2) of the plastic window pane is a viewing side of the plastic window pane.

14. Process for producing a transparent sheet-like plastic window pane of a motor vehicle, comprising the steps of:
- injection-moulding the plastic window pane (1) by means of a direct injection-moulding process, with the result that at least one sprue mark (4) located on an optical surface (1.2) of the plastic window pane (1) is formed; and
- covering the sprue mark (4) with a covering material (2) of lower transparency than the plastic window pane (1).

15. Process according to Claim 14,
**characterized in that**
during the direct injection process the moulding compound for producing the plastic window pane (1) is fed to a mould cavity via an injection runner with blocking slide closure (22) or needle valve closure.

16. Process according to Claim 14 or 15,
**characterized in that**
a covering material (2) made from plastics is injection-moulded onto the plastic window pane (1) in order to cover the sprue mark (4).

17. Process according to Claim 14 to 16,
**characterized in that**
the covering material (2) is completely opaque.

18. Process according to Claim 14 to 17,
**characterized in that**
the covering material (2) is black.

19. Use of the transparent sheet-like plastic window pane of a motor vehicle according to one of the Claims 1 to 12, wherein the optical surface (1.1) opposed to the optical surface (1.2) of the plastic window pane (1) is used as a viewing side.

## Revendications

1. Pièce conformée planaire en matière plastique transparente, comprenant au moins un emplacement d'attaque de coulée (4), qui se trouve au niveau d'une surface optique (1.2), détournée d'une face visible, de la pièce conformée en matière plastique (1) et qui apparaît du fait de l'utilisation d'un procédé d'injection directe lors de la fabrication de la pièce conformée en matière plastique (1), dans laquelle l'emplacement d'attaque de coulée (4) est recouvert d'un matériau de couverture (2) présentant une transparence plus faible que la pièce conformée en matière plastique (1).

2. Pièce conformée planaire en matière plastique transparente selon la revendication 1,
**caractérisée en ce que** l'emplacement d'attaque de coulée (1.2) est une nervure de coulée (4) qui se dresse depuis la surface optique (1.2) ou un emplacement de séparation d'une telle nervure de coulée (4) séparée vis-à-vis de la surface optique (1.2), ou encore d'un emplacement de pressage d'une aiguille d'un obturateur-soupape a aiguille.

3. Pièce conformée planaire en matière plastique transparente selon la revendication 1 ou 2,
**caractérisée en ce que** l'emplacement d'attaque de coulée (4) se trouve dans une zone de la surface optique (1.2) proche de la bordure.

4. Pièce conformée planaire en matière plastique transparente selon l'une des revendications précédentes,
**caractérisée en ce que** le matériau de couverture est une matière plastique (2) rapportée par injection sur la pièce conformée en matière plastique (1).

5. Pièce conformée planaire en matière plastique transparente selon la revendication 4,
**caractérisée en ce qu'**au moins une nervure d'attaque de coulée (4) qui se dresse depuis la surface optique (1.2) est enrobée de façon autoportante par la matière plastique (2).

6. Pièce conformée planaire en matière plastique transparente selon la revendication 4,
**caractérisée en ce qu'**au moins une nervure d'attaque de coulée (4) qui se dresse depuis la surface optique (1.2) est totalement noyée dans la matière plastique (2).

7. Pièce conformée planaire en matière plastique transparente selon l'une des revendications 1 à 3,
**caractérisée en ce que** le matériau de couverture (2) est une laque appliquée sur la pièce conformée en matière plastique (1).

8. Pièce conformée planaire en matière plastique transparente selon la revendication 7,
**caractérisée en ce qu'**au moins une nervure d'attaque de coulée (4) qui se dresse depuis la surface optique (1.2) est enveloppée par la laque.

9. Pièce conformée planaire en matière plastique transparente selon l'une des revendications précédentes,
**caractérisée en ce que** la pièce conformée en matière plastique (1) présente une coloration.

10. Pièce conformée planaire en matière plastique transparente selon l'une des revendications précédentes,
**caractérisée en ce que** le matériau de couverture (2) est totalement opaque.

11. Pièce conformée planaire en matière plastique transparente selon l'une des revendications précédentes,
**caractérisée en ce que** le matériau de couverture (2) est noir.

12. Pièce conformée planaire en matière plastique transparente selon l'une des revendications précédentes,
**caractérisée en ce que** le matériau de couverture (2) entoure de façon fermée la pièce conformée en matière plastique (1) à la manière d'un cadre.

13. Pièce conformée planaire en matière plastique selon l'une des revendications précédentes,
**caractérisée en ce que** la pièce conformée en matière plastique (1) est une vitre de fenêtre en matière plastique.

14. Procédé pour la fabrication d'une pièce conformée planaire en matière plastique transparente, comprenant les étapes suivantes :
moulage-injection de la pièce conformée en matière plastique (1) au moyen d'un procédé d'injection directe, en raison duquel apparaît au moins un emplacement d'attaque de coulée (4) situé sur une surface optique (1.2), détournée d'une face visible, de la pièce conformée en matière plastique (1) ; et
recouvrement de l'emplacement d'attaque de coulée (4) avec un matériau de couverture (2) présentant une transparence plus faible que la pièce conformée en matière plastique (1).

15. Procédé selon la revendication 14,
**caractérisé en ce que** lors du procédé d'injection directe, la masse de matière plastique destinée à réaliser la pièce conformée en matière plastique (1) est amenée à une cavité de moulage via un canal d'injection avec un obturateur à tiroir (22) ou un obturateur-soupape à aiguille.

16. Procédé selon l'une des revendications 14 ou 15,
**caractérisé en ce que** pour recouvrir l'emplacement d'attaque de coulée (4) un matériau de couverture (2) en matière plastique est rapporté par injection sur la pièce conformée en matière plastique (1).

17. Procédé selon l'une des revendications 14 à 16,
**caractérisé en ce que** le matériau de couverture (2) est totalement opaque.

18. Procédé selon le l'une des revendications 14 à 17,
**caractérisé en ce que** le matériau de couverture (2) est noir.

19. Utilisation d'une pièce conformée planaire en matière plastique transparente présentant au moins un emplacement d'attaque de coulée (4) qui se trouve sur une première surface optique (1.2) de la pièce conformée en matière plastique (1) et qui apparaît suite à l'application d'un procédé d'injection directe lors de la fabrication de la pièce conformée en matière plastique (1) de telle façon qu'une seconde surface optique (1.1), à l'opposé de la première surface optique, forme une face visible de la pièce conformée en matière plastique (1), dans laquelle l'emplacement d'attaque de coulée (4) est recouvert d'un matériau de couverture (2) présentant une transparence plus faible que la pièce conformée en matière plastique (1).
